# EUROPEAN PATENT APPLICATION

(11) **EP 2 105 266 A2**
(43) Date of publication of application: **30.09.2009**
(21) Application number: 08167155.4
(22) Date of filing: 21.10.2008
(51) Int. Cl.: B26B 9/00, B26B 13/00

(54) **Blade using ultra-hard microscopic particles**

(30) Priority: 25.03.2008 KR 20080027319
(71) Applicant: Forever Co., Ltd., Kawaguchi-shi, Saitama 332-0017 (JP)
(72) Inventor: Sueda, Kimiko, Tokyo 111-0024 (JP); Kusanagi, Ryota, Saitama-ken, Saitama 332-0017 (JP)
(74) Representative: Texier, Christian

(57) **Abstract**

The present invention relates to a blade that comprises a blade main body and an edge part. In the blade main body and the edge part, one or more comprising the edge part are manufactured by using a powder composition that comprises less than 5% by weight of the ultra-hard particle powder having a particle size in the range of 1 µm to 5 µm based on a total weight of the powder composition and the balance metal powder forming a matrix according to a powder metallurgy process. The blade according to the present invention has a sawlike or wavy edge part to provide an excellent cutting ability. Even though the abrasion occurs by using the blade, since the sawlike or wavy edge part is semipermanently maintained, the cutting ability is not reduced.

## Description

### BACKGROUND OF THE INVENTION

### 1. Field of the Invention

The present invention relates to a blade that is used in kitchen knives, scissors, knives, square-shaped and ring-shaped knives and the like.

### 2. Description of the Related Art

Most of home and industrial blades used in kitchen knives, scissors, knives, square-shaped cutters, ring-shaped rotation blades and the like are manufactured by performing heat treatment of carbon steel material and the like so that the whole material have almost the same hardness to obtain a blade material, shaping the blade material into a desired shape, and putting an edge on a predetermined portion of an edge part. With respect to the heat treatment of carbon steel, the entire blade or the edge part may be selectively subjected to the heat treatment, and the hardness is almost constant according to the condition and the type of material. In addition, since the hardness is constant, almost the same abrasion result and the uniform abrasion are shown in the constant abrasion condition.

In respects to the condition for controlling the cutting ability of the blade, it is known that the sawlike or wavy edge part has the high cutting ability as compared to the flat edge part. Accordingly, when the edge part loses the sawlike or wavy shape due to the abrasion, it can be easily expected that the cutting ability is significantly reduced. Thus, maintenance of the sawlike or wavy edge part is very important in manufacture of the blade with the excellent cutting ability and durability. However, even though many efforts have been made to maintain the sawlike or wavy edge of the blad for a long time, effective method has not yet been suggested.

### SUMMARY OF THE INVENTION

Accordingly, the present invention has been made keeping in mind the problems occurring in the related art, and an object of the present invention is to provide a blade having a sawlike or wavy edge, wherein since the sawlike or wavy protrusions (tops) are formed with ultra-hard particle powder having the high abrasion resistance and the sawlike or wavy the recesses (gullies) are formed with metal powder having the relatively low abrasion resistance, even though the abrasion occurs by using the knife, the sawlike or wavy edge part is semipermanently maintained, so that the blade has not only the excellent cutting ability, but the excellent durability due to semipermanent maintenance of the excellent cutting ability.

The present invention provides a blade that comprises a blade main body and an edge part. In the blade main body and the edge part, one or more comprising the edge part are manufactured by using a powder composition that comprises less than 5% by weight of the ultra-hard particle powder having a particle size in the range of 1 µm to 5 µm based on a total weight of the powder composition and the balance metal powder forming a matrix according to a powder metallurgy process.

A blade according to the present invention has a sawlike or wavy edge to provide an excellent cutting ability. Even though the abrasion occurs by using the blade, since the sawlike or wavy edge is semipermanently maintained, the cutting ability is not reduced, thus providing the excellent quality.

### BRIEF DESCRIPTION OF THE DRAWINGS

The above and other features and advantages of the present invention will become more apparent by describing in detail preferred embodiments thereof with reference to the attached drawings in which:
FIG. 1 is an enlarged view that illustrates a front end of the edge according to the present invention (1: a front end of the edge, 2: the thickness of a front end of the edge, 3: an ultra-hard particle powder);
FIG. 2 is a side view that illustrates a blade of a kitchen knife as an example of the blade according to the present invention (the blade main body and the edge part have the same composition; 10: a blade of a kitchen knife, 11: a blade main body, 12: an edge part, 13: an ultra-hard particle powder);
FIG. 3 is a side view that illustrates a blade of a kitchen knife as an example of the blade according to the present invention (the blade main body and the edge part have the different compositions; 10: a blade of a kitchen knife, 11: a blade main body, 12: an edge part, 13: an ultra-hard particle powder);
FIG. 4 is a side view that illustrates a blade of a cutter knife for papers as an example of the blade according to the present invention (20: a blade of a cutter knife, 21: a blade main body, 22: an edge part, 23: an ultra-hard particle powder); and
FIG. 5 is a sectional view of a blade as an example of the blade according to the present invention; and
FIG. 6 is a view that illustrates a measurement device and a measurement method for measuring the bending resistance strength of the blade according to the present invention.

### DESCRIPTION OF THE PREFERRED EMBODIMENTS

Hereinafter, a detailed description will be given of the present invention.

The present invention relates to a blade that comprises a blade main body and an edge part. In the blade main body and the edge part, one or more comprising the edge part are manufactured by using a powder composition that comprises less than 5% by weight of the ultra-hard particle powder having a particle size in the range of 1 µm to 5 µm based on a total weight of the powder composition and the balance metal powder forming a matrix according to a powder metallurgy process.

In the present invention, the powder composition preferably comprises 1 to 4% by weight of the ultra-hard particle powder having a particle size in the range of 1 µm to 5 µm and 96 to 99% by weight of metal powder forming a matrix based on a total weight of the powder composition.

In the present invention, the powder composition may further comprise an additive that is generally used in the art in an amount of 3% by weight or less based on the total weight of the powder composition.

The blade according to the present invention does not use a blade material, which has a predetermined shape and hardness capable of being obtained by using melt rolling and the like, such as carbon steel and alloy steel, but use a blade material that is manufactured by using a powder metallurgy process. The powder that is used in the powder metallurgy process may be roughly classified into the metal powder and the ultra-hard particle powder, and after the powder composition in which the two species of powder are mixed with each other in a predetermined ratio is filled in the mold, the powder composition is pressed and fired to form the blade material. The blade material has a shape in which the ultra-hard particles are dispersed in the metal structure.

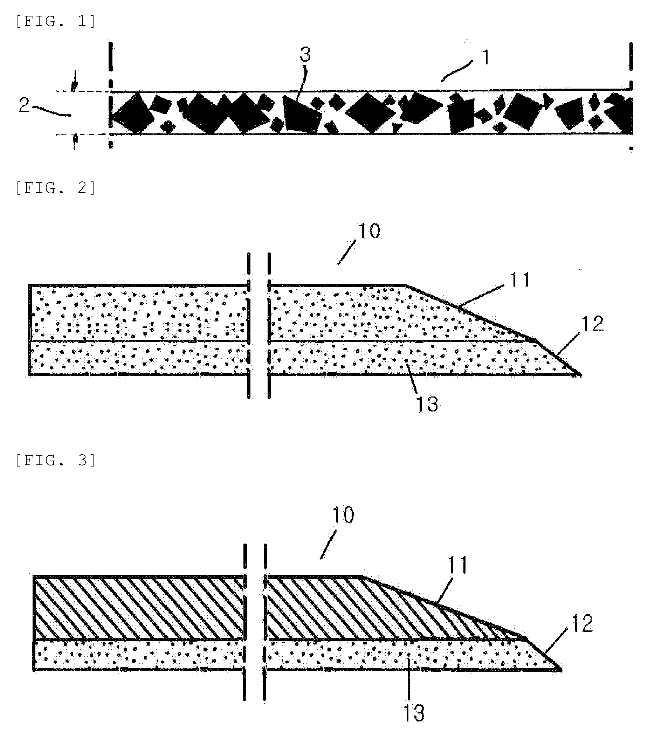

It is preferable that the ultra-hard particles according to the present invention have the particle size in the range of 1 µm to 5 µm. In the present invention, the edge part has the sawlike or wavy shape, and the ultra-hard particles form the protrusions (tops) at the sawlike or wavy edge part and provide cutting ability to the knife. Accordingly, in the case of when the ultra-hard particles have the large particle size of more than 5 µm, it is difficult to obtain a smooth cut surface because hooking occurs or rough surfaces are formed during the cutting operation and the thickness of the edge part is increased (see FIG. 1). In the case of when the particle size is less than 1 µm, the height of the top (protrusion) is less than 0.5 µm. Thus, the effect of the formation of the sawlike or wavy edge part is reduced.

It is preferable that the blade of the present invention comprises less than 5% by weight of the ultra-hard particle powder having a particle size in the range of 1 µm to 5 µm based on a total weight of the powder composition. In the case of when the content of the ultra-hard particle powder is 5% by weight or more, since the mixing of the impurity is increased, the strength of the metal structure as the matrix is reduced, thereby cracks, chipping and the like may easily occur in the blade main body or the edge part.

It is more preferable that the blade of the present invention comprises 1 to 4% by weight of the ultra-hard particle powder having a particle size in the range of 1 µm to 5 µm based on a total weight of the powder composition. The reason is that in the case of the mixing in an amount of, for example, 4% by weight, in respects to the length of 1 mm of the end of the edge part, the maximum 80 ultra-hard particles having the particle size of 1 µm may be present (see FIG. 1), accordingly, when the edge part is subjected to sliding by 5 cm in order to cut a object, 4,000 particles having the particle size of 1 µm provide the saw blade effect, sliding the cut surface, thereby the very effective cutting ability is obtained. However, in the case of when the content is more than 4% by weight, since the mixing of the impurity is increased, the strength of the metal structure as the matrix is reduced, thereby cracks, chipping and the like may occur in the blade main body or the edge part. In addition, in the case of when the content of the ultra-hard particle powder is more than 4% by weight, since the space between the hard particles at the front end of the edge part is very narrow, it is difficult to realize the saw blade effect. In the case of when the content of the ultra-hard particle powder is also less than 1% by weight, the amount of the protruding particles is too small, and thus the cutting ability is reduced (see FIG. 1).

In the above description, the reason why the diameter of the ultra-hard particle powder is in the range of 1 µm to 5 µm and the reason why the content of the ultra-hard particle powder is less than 5% by weight or in the range of 1 to 4% by weight are described in detail. Under this condition, in order to semipermanently maintain the sawlike or wavy edge part, it is preferable that the ultra-hard particle powder have the abrasion resistance that is 5 times higher than that of the metal powder. The reason is that when the knife is used, the abrasion load that is applied to the ultra-hard particles forming the protrusions (tops) from the cutting substance is much higher than the abrasion load applied to the metal structure forming the recesses (gullies) as the matrix. Thus, it is required that the abrasion resistance that is 5 times higher than that of the metal structure is ensured so that the sawlike or wavy edge part is semipermanently maintained even thought the blade is used, thereby the initial cutting ability can be maintained. If the abrasion resistance of the ultra-hard particle is less than 5 times as high as that of the metal structure, the sawlike or wavy edge part may be worn when the blade is used for a long period of time and as a result, the flat edge part may reduce the cutting ability.

It is preferable that the HV hardness of the ultra-hard particle powder used in the present invention be HV 2,000 or more. In the case of when the HV hardness is less than HV 2,000, there is a disadvantage that the edge part is rapidly abraded.

The ultra-hard particle powder that is used in the present invention may be coated with nickel or titanium before the blade material is formed. The coated ultra-hard powder particles have the very high affinity ability in respects to the metal structure, which constitutes the matrix, such as titanium, titanium alloy and the like, thus improving the strength of the blade.

The blade according to the present invention may further comprise silver powder, and in this case, an antimicrobial function may be provided to the blade.

The ultra-hard particle powder that is used in the present invention may comprise one or more selected from the group consisting of diamond, CBN (cubic boron nitride), TIC (titanium carbide), VC (vanadium carbide), and GC (green silicon carbide) and the like.

In addition, the metal powder may comprise one or more selected from the group consisting of Ti, Ti alloy, austenite stainless steel, and ferrite alloy stainless steel and the like.

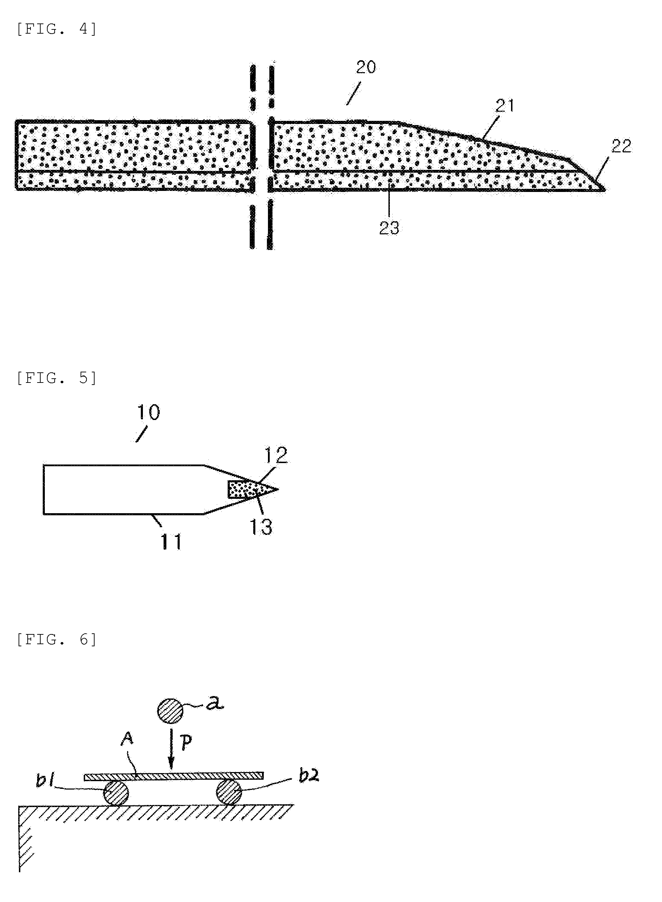

With respect to the blade according to the present invention, according to the purpose, both the blade main body and the edge part may be manufactured by using the powder composition that comprises 1 to 4% by weight of the ultra-hard particle powder having the particle size in the range of 1 µm to 5 µm and 96 to 99% by weight of the metal powder that forms the matrix based on the total weight of the powder composition according to the powder metallurgy process. FIGS. 2 and 4 are examples of the blade, and illustrate a blade of a kitchen knife and a blade of a cutter knife for paper.

In addition, according to the purpose, the blade main body may be manufactured to obtain a form that comprises no ultra-hard particle powder, and in this case, the blade main body may be made of one or more metal powders that are selected from the group consisting of Ti, Ti alloy, austenite stainless steel, ferrite alloy stainless steel and the like. In this case, the blade may be manufactured by using the powder composition that comprises the metal powder, the ultra-hard particle powder forming the edge part, and the metal powder forming the matrix of the edge part according to the powder metallurgy process. FIG. 3 is an example of the blade, and illustrates a blade of a kitchen knife.

The blade according to the present invention may be applied to kitchen knives, scissors, knives, square-shaped and ring-shaped knives and the like.

A method of manufacturing the blade according to the present invention is as follows.

The blade according to the present invention is manufactured by filling the powder composition that comprises less than 5% by weight of the ultra-hard particle powder having a particle size in the range of 1 µm to 5 µm based on a total weight of the powder composition and the balance metal powder forming a matrix in a desired form, compressing the composition, firing the compressed composition in a vacuum furnace or an inert gas furnace, and putting an edge on the fired substance. In this case, the firing temperature is a temperature that is required to avoid deformation of the ultra-hard particle powder and the metal powder, and preferably 1,300°C or less. However, it is deemed that the firing temperature depends on the structure of the furnace and the other conditions.

In the present invention, the powder composition preferably comprises 1 to 4% by weight of the ultra-hard particle powder having a particle size in the range of 1 µm to 5 µm and 96 to 99% by weight of metal powder forming a matrix based on a total weight of the powder composition.

In addition, in the case of the blade in which the compositions of the blade main body and the edge part are different from each other, the powder that comprises the metal powder constituting the blade main body and the ultra-hard particles and the metal powder forming the edge part is filled in a desired form, and compressed, and the subsequent process is the same as the above.

Hereinafter, the present invention will be described in detail in light of Examples. The present invention may, however, be embodied in many different forms and should not be construed as being limited to the Examples set forth herein. Rather, these Examples are provided such that this disclosure will be thorough and complete and will fully convey the concept of the present invention to those skilled in the art.

### EXAMPLE 1: Manufacturing of the blade

0.170 g (4% by weight) of diamond powder and 4.075 g (96% by weight) of austenite stainless steel powder were mixed with each other, filled in a mold, processed under a predetermined pressure, and fired in an inert gas furnace at 1200°C. The fired structure was subjected to putting an edge to manufacture the blade.

### COMPARATIVE EXAMPLE 1: Manufacturing of the blade

0.875 g (21% by weight) of diamond powder and 3.37 g (79% by weight) of mixed alloy powder (mixed powder of pure Ti powder and 6 Al 4 V alloy powder mixed with each other at a ratio of 9:1) were mixed with each other, filled in a mold, processed under a predetermined pressure, and fired in an inert gas furnace at 1200°C. The fired structure was subjected to putting an edge to manufacture the blade.

### EXPERIMENTAL EXAMPLE: Measurement of bending resistance strength of the blade

The bending resistance strengths of the blades that were manufactured in Example 1 and Comparative Example 1 were measured by using the apparatus shown in FIG. 5. As shown in FIG. 5, the blades that were manufactured in Example 1 and Comparative Example 1 were put on globes for support b1 and b2, a load was applied thereto by using a globe for load to measure an average load value P when the blade was bent. In result, in the case of the blade that was prepared in Example 1, the average load value P was about 200.0 kg/mm³ when the blade was bent. However, in the case of the blade that was prepared in Comparative Example 1, the average load value P was about 4.0 kg/mm³.

From the test results, it could be seen that the blade according to the present invention (the content of the ultra-hard particle powder was in the range of 1 to 4% by weight) had the bending resistance strength that was much higher than that of the blade of Comparative Example 1 (the content of the ultra-hard particle powder was more than 4% by weight). This result can mean that in the blade (Example 1) according to the present invention, the damage of the blade was significantly reduced and the cutting property was maintained for a long time at the same condition as compared to the blade manufactured in Comparative Example 1.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A blade comprising a blade main body and an edge part, wherein in the blade main body and the edge part, one or more comprising the edge part are manufactured by using a powder composition that comprises less than 5% by weight of the ultra-hard particle powder having a particle size in the range of 1 µm to 5 µm based on a total weight of the powder composition and the balance metal powder forming a matrix according to a powder metallurgy process.

2. The blade as set forth in claims 1, wherein the powder composition comprises 1 to 4% by weight of the ultra-hard particle powder having a particle size in the range of 1 µm to 5 µm and 96 to 99% by weight of metal powder forming a matrix based on a total weight of the powder composition.

3. The blade as set forth in claims 1 or 2, wherein the ultra-hard particle powder has an abrasion resistance that is five times higher than an abrasion resistance of the metal powder.

4. The blade as set forth in claims 1 or 2, wherein the ultra-hard particle powder has a HV hardness of 2,000 or more.

5. The blade as set forth in claims 1 or 2, wherein the ultra-hard particle powder is coated with nickel or titanium.

6. The blade as set forth in claims 1 or 2, wherein the powder composition further comprises silver powder.

7. The blade as set forth in claims 1 or 2, wherein the ultra-hard particle powder comprises one or more selected from the group consisting of diamond, CBN (cubic boron nitride), TIC (titanium carbide), VC (vanadium carbide), and GC (green silicon carbide).

8. The blade as set forth in claims 1 or 2, wherein the metal powder comprises one or more selected from the group consisting of Ti, Ti alloy, austenite stainless steel, and ferrite alloy stainless steel.

9. The blade as set forth in claim 2, wherein both the blade main body and the edge part are manufactured by using a powder composition that comprises 1 to 4% by weight of the ultra-hard particle powder having a particle size in the range of 1 µm to 5 µm and 96 to 99% by weight of metal powder forming a matrix based on a total weight of the powder composition according to a powder metallurgy process.

10. The blade as set forth in claims 1 or 2, wherein the blade main body is formed by using one or more metal powders selected from the group consisting of Ti, Ti alloy, austenite stainless steel, and ferrite alloy stainless steel according to a powder metallurgy process.
